# NEW EUROPEAN PATENT SPECIFICATION

(11) **EP 3 546 153 B2**
(45) Date of publication and mention of the opposition decision: **08.04.2026**
(45) Mention of the grant of the patent: 12.05.2021
(21) Application number: 18164369.3
(22) Date of filing: 27.03.2018
(51) Int. Cl.: B26B 19/38, B26B 19/04, B26B 19/06

(54) **PERSONAL CARE DEVICE**
KÖRPERPFLEGEVORRICHTUNG
DISPOSITIF DE SOINS PERSONNELS

(43) Date of publication of application: 02.10.2019
(73) Proprietor: Braun GmbH, 61476 Kronberg im Taunus (DE)
(72) Inventor: Burghardt, Renata, 61476 Kronberg (DE); Füllgrabe, Martin Ludwig Wolfgang, 61476 Kronberg (DE); Fürst, Stefan, 61476 Kronberg (DE); Neyer, Christian, 61476 Kronberg (DE); Weinkauff, Johannes Julian, 61476 Kronberg (DE); Zechel, Evelyn Marion, 61476 Kronberg (DE); Zimmermann, Lucy Abigail, 61476 Kronberg (DE)
(74) Representative: Elkington and Fife LLP

(56) References cited:
- EP-A1- 2 757 798
- EP-A1- 3 513 924
- EP-A1- 3 513 925
- EP-A1- 3 513 927
- EP-A1- 3 645 223
- EP-B1- 0 720 523
- EP-B1- 1 549 468
- WO-A1-2007/033729
- WO-A1-2015/067489
- WO-A1-2015/067498
- WO-A1-2016/094327
- WO-A1-2016/180929
- WO-A1-2017/032547
- WO-A1-2017/032547
- WO-A1-2017/062326
- WO-A1-2017/157411
- WO-A1-2018/037318
- WO-A2-02/083257
- DE-A1- 102005 045 713
- DE-A1- 102006 004 675
- DE-A1- 102014 001 163
- US-A- 5 687 481
- US-A1- 2004 231 160
- US-A1- 2007 192 174
- US-A1- 2009 056 141
- US-A1- 2010 170 052
- US-A1- 2015 020 658
- US-A1- 2016 143 718
- US-A1- 2016 263 755
- US-A1- 2017 043 490
- US-A1- 2017 099 199
- US-A1- 2017 232 624
- US-B1- 6 497 043
- US-B2- 8 585 411

## Description

### FIELD OF THE INVENTION

The present invention relates to a method of operating and/or controlling a personal care device, in particular a hair removal device such as an electric shaver, wherein at least one user's behavior parameter characterizing the user's behavior when handling the personal care device is detected by at least one detector during the personal care treatment. Furthermore, the present invention also relates to such personal care device comprising a working head for effecting a personal care treatment to a body surface, a handle for moving the working head along the body surface, and at least one detector for detecting at least one user's behavior parameter characterizing the user's behavior when handling the personal care device during a personal care treatment session.

### BACKGROUND OF THE INVENTION

Personal care devices are widely used to apply different types of personal care treatments to users, wherein such personal care devices may include hair removal devices such as epilators, shavers or razors which may be electric or manual and/or wet or dry, or beard trimmers. Furthermore, other personal care devices include dental care appliances such as electric or manual toothbrushes, interdental cleaners or gum massaging devices, or skin treatment devices such as massaging devices or vibrators. All such personal care devices are subject to the problem that different people behave in different ways and thus, different users use the personal care device in different ways. Even when the personal care device provides for self-adjustment of the setting of some of its working parameters, it is difficult to fit different users' characteristics.

In a more general context, different people behave in different ways. For example, when cleaning the same table with the same amount of dirt with the same cloth, some people will press hard and others will press more lightly. Some will use circling motions, while others will move the cloth in straight lines. These different behaviors come naturally to the different people. If Person A would be forced to use the cloth in the way Person B does and vice versa, then they would find this type of usage to require more effort (physical and/or concentration).

A perfectly developed product offers an easy and intuitive usage for every user. In particular, there is no need for the user to be highly concentrated, make un-ergonomical movements or exert extra effort during the usage of the product - in other words the user can operate the product using his/her natural behavior and does not need to alter this behavior as otherwise the product does not work well enough.

For complex products (e.g. products with more than one component, mechanical products, electrical/electronic products, etc), a product design that performs well with a multitude of different natural behaviors is however very difficult to achieve, in particular as humans behave in very many different ways, thus no single product design will perform optimally for all natural behaviors of all people. One possible solution to this is to design a product that can adapt to fit the different natural behaviors of different users.

In order to do this however, the product needs know when and how to adapt, in other words it is necessary to identify when the user deviates from his/her natural behavior and what his/her natural behavior is. This is not a simple task as people behave in very different ways and what might be natural behavior for one person may not be a natural behavior for another. Also, it is advantageous to understand what the user is trying to achieve with his non-natural behavior (i.e. what the product is not delivering when the person only uses his natural behavior) in order for the product to adapt appropriately.

For example, electric shavers usually have one or more cutter elements driven by an electric drive unit in an oscillating manner where the cutter elements reciprocate under a shear-foil, wherein such cutter elements or undercutters may have an elongated shape and may reciprocate along their longitudinal axis. Other types of electric shavers use rotatory cutter elements which may be driven in an oscillating or a continuous manner. Said electric drive unit may include an electric motor or an electric-type linear motor, wherein the drive unit may include a drive train having elements such as an elongated drive transmitter for transmitting the driving motion of the motor to the cutter element, wherein the motor may be received within the handle portion of the shaver or in the alternative, in the shaver head thereof.

Although such personal care devices such as shavers are used on a daily basis by most users, it is sometimes difficult to operate and handle the shaver indeed perfectly. Due to different preferences and habits of different users, the shaver is not operated in its optimum range even when the shaver is adjustable. For example, the working head with the cutter elements may be pressed against the skin too strongly, or the shaver may be held at an orientation preventing the working head's shear foils from full contact with the skin, even if the working head is pivotably supported to compensate for some angular displacement. Sometimes it is also difficult to move the shaver along the skin at the right velocity in the right direction to the relevant skin portions.

Document EP 0 720 523 B1 discloses an electric shaving apparatus which allows for adjusting the height over which the cutter elements project from the shaver head surface, adjusting the pre-tensioning force of the cutter blades against which pre-tensioning force the cutter blades may dive, and adjusting the motor speed so as to balance shaving performance and skin irritation. Said adjustable parameters are automatically controlled in response to a plurality of detected working parameters by means of fuzzy logic to balance the influence of the different input signals indicative of the different working parameters.

Furthermore, WO 2007/033729 A1 discloses an electric hair removal device adjusting the motor speed and thus cutter speed in response to the velocity at which the hair removal device is moved along the user's skin which velocity is measured by means of a rotational sensor. The shaver includes a memory in which velocity detected in the past is stored so as to start a hair removal session with a motor speed in line with the stored velocity detected in the past.

Document WO 2015/067498 A1 discloses a hair cutting device, wherein a position identifier including cameras identifies the position of the hair cutter relative to the body part to be treated, wherein a feedback module gives feedback to indicate the desired path and the desired angle of orientation of the cutter relative to the body part.

Furthermore, document WO 2017/062326 A1 describes a personal care device linked to a smartphone and a computer system via a network so as to monitor device usage. More particularly, working time is monitored to indicate when a replacement part such as a razor cartridge needs to be replaced, wherein determination of working time includes adjustment of the sensor settings such as the minimum duration for counting a shaver stroke.

Furthermore, document WO 2017/032547 A1 discloses a shaving device giving a user shaving instructions acoustically and/or visually, wherein such shaving instructions such as "user gentle pressure only" or "use sensitive speed setting" are given based on usage data such as pressure data and/or motion data measured by the shaving device. It is also suggested to take into account usage data history to select the appropriate instruction from a stored list of instructions. The user has to manually input some personal assessment data which may comprise information relating to skin sensitivity, age, hair type, uneven skin, in-growing hair, difficulties to catch hair, etc., which the user may provide via a user interface in response to a questionnaire presented via the user interface.

EP 1549468 B1 describes a shaver which detects proper contact of the shear foils with the skin to be shaved, wherein it is mentioned that such contact may be detected by means of an inductive sensor, a capacitance sensor or an optical sensor which may include a light barrier immediately above the shear foil. It is suggested to automatically vary the position of the shaver head relative to the handle by means of an actuator for pivoting or tilting the shaver head, when there is improper contact to the skin.

### SUMMARY OF THE INVENTION

It is an objective underlying the present invention to provide for an improved personal care device and an improved method of operation thereof, avoiding at least one of the disadvantages of the prior art and/or further developing the existing solutions. A more particular objective underlying the invention is to provide for an improved method and personal care device at least reducing non-natural behavior of the user including adaption of the user to the personal care device.

A further objective underlying the invention is to provide for an improved personal care device requiring less adaption from the user to the product.

A still further objective underlying the invention is to provide for an improved method of operating and/or controlling a personal care device to achieve better fit to different behavior and preferences of different users.

To achieve at least one of the aforementioned objectives, a method of operating and/or controlling a personal care device is provided according to claim 1, a method of operating and/or controlling an electric shaver is provided according to claim 2, a personal care device is provided according to claim 15, and an electric shaver is provided according to claim 16. More particularly, the personal care device or electric shaver includes a behavior determination algorithm implemented in a control unit of the personal care device in terms of, e.g., software executed by a microprocessor, for automatica determination of natural or non-natural behavior depending on the comparison of the detected real-time data of the user's behavior parameter to the historical data of the user's behavior parameter.

Such non-natural behavior may include an extra-physical effort, e.g. pressing the personal care device's working head harder onto the body surface and/or gripping the handle with increased pressure, and/or unergonomic movements or body positions such as holding the wrist at an extreme angle, and/or additional actions or additional movements such as facial grimaces, skin stretching, and/or an extra-mental effort such as extra concentration with longer periods of not closing the eye's lid and/or using the product for longer in general or in specific areas and/or for specific tasks. In addition or in the alternative, such non-natural behavior may include a change in behavior driven by not getting the end result that a user wants such as missed hairs with the user's natural behavior.

In contrast, natural behavior may be identified as any behavior not including the aforementioned non-natural behaviors, and/or a lower effort than non-natural behaviors and/or intuitive behaviors and/or behaviors more enjoyable than non-natural behaviors, e.g. going along with smiling and/or relaxed gripping of the handle. In addition or in the alternative, natural behavior may be behavior without change and/or behavior with changes that are driven by physiology, e.g. when a shaver is guided with lighter pressure over the Adam's apple.

Due to such automatic determination of natural or non-natural behavior, significant advantages and consumer benefits may be achieved which may include:
- Less effort (mental and/or physical), more intuitive, more enjoyable, quicker device usage
   wherein less mental effort can for example be less concentration needed;
- Better (shaving) result and/or better usage experience (of shaving);
- Improvement not just for the average user but for every user;
- Reduces the need for the users to alter their behavior to the behavior that the product requires, but instead adapts the product to fit the user's natural behavior, which has the benefit of much less effort (mental and/or physical) for the user.

Basically, a plurality of different behavioral parameters may be detected during a treatment session and compared to historical data thereof to reliably determine natural behavior and non-natural behavior. According to an advantageous aspect, such behavioral parameters detected in real-time during a treatment session may include skin contact pressure with which the working head is pressed against a body surface as detected by a skin contact pressure detector, and/or stroke frequency and/or stroke direction and/or stroke length at which the personal care device is guided along a body surface as detected by, e.g., an accelerometer, and/or twisting of the personal care device as detected by, e.g., a gyro meter, and/or hair removal activity.

All such real-time data may be compared to historical data of corresponding behavioral parameters, wherein such historical data may come from different sources, e.g. from a storage storing the data of the behavioral parameter as detected by the detector during previous treatment sessions and/or a previous part of a current session, and/or behavioral data detected for the same user when handling other devices, and/or average behavioral parameters from other users for the same type of personal care device and/or other personal care devices, and/or behavioral parameters stored in a database and known to typically indicate non-natural behavior and/or behavioral parameters stored in a database and known to typically indicate natural behavior.

So as to make the identification of non-natural behavior from said comparison of real-time data to historical data easier, the historical data stored in a storage or database may be classified to represent typical natural behavior and/or typical non-natural behavior, wherein such stored historical data may be associated with corresponding classifiers. For example, the behavior determination algorithm may analyze the real-time data of the behavioral parameter in terms of, e.g., value, changes in the signal, increasing and/or decreasing tendency, maximum and minimum values, amplitude, mean value or signal pattern and/or data pattern such as data values over time, and may compare such real-time data and analysis thereof to stored historical data to identify the closest historical set of data to determine natural or non-natural behavior on the basis of the classifier associated with the closest set of data.

According to the invention, comparisons such as determination of a deviation of the real-time data from average historical data may be used to identify natural/non-natural behavior.

In addition to the aforementioned behavioral parameters, the algorithm may further consider environmental parameters as detected by at least one environmental detector and/or at least one physiological detector such as air humidity, skin humidity and/or beard length, when determining natural behavior and/or non-natural behavior.

These and other advantages become more apparent from the following description giving reference to the drawings and possible examples.

### BRIEF DESCRIPTION OF THE DRAWINGS

- Fig. 1:: a perspective view of a personal care device in terms of an electric shaver comprising a handle and a shaver head pivotably connected thereto, wherein pivoting stiffness of the shaver head and diving resistance of the cutter elements may be adjusted in response to user behavior,
- Fig. 2:: a flow chart diagram indicative of the method steps and the parameters' input into the algorithm for determining natural and non-natural behavior,
- Fig. 3:: a schematic front and side adjustment mechanism for adjusting views of the shaver head's pivoting stiffness,
- Fig. 4:: schematic front and side views of a shaver similar to Fig. 2 with an adjustment mechanism for adjusting diving resistance of the cutter elements according to a further embodiment,

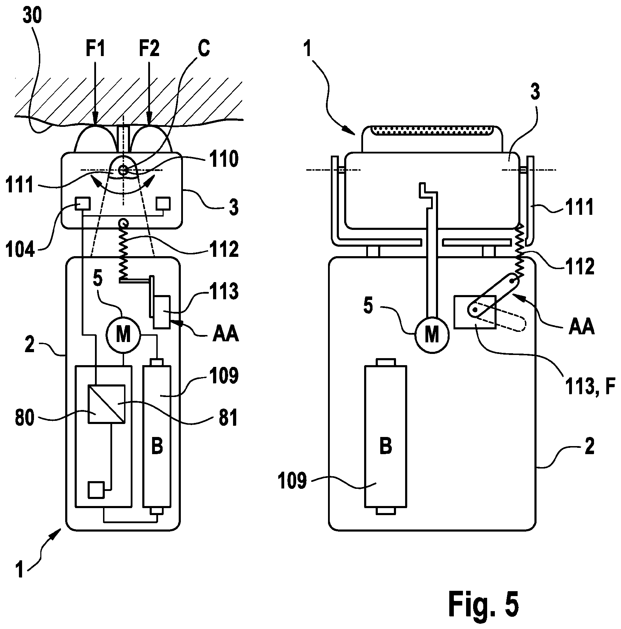

- Fig. 5:: schematic front and side views of a shaver similar to Fig. 2 and 3 having the adjustment mechanism for adjusting pivoting stiffness and the adjustment mechanism for adjusting diving resistance according to a further embodiment.

### DETAILED DESCRIPTION OF THE INVENTION

According to an aspect, it is suggested to compare the real-time data of the at least one behavioral parameter as detected by the at least one detector when handling the personal care device during a personal care treatment to historical data of at least one behavioral parameter as stored in a storage, and to determine from said comparison of the real-time data of the user's behavior to the historical data thereof whether the user's behavior when handling the personal care device is natural or non-natural behavior. More particularly, the personal care device may include a behavior determination algorithm implemented in a control unit of the personal care device or in an external device (e.g. in a cloud) in terms of, e.g., software executed by a microprocessor, for automatic determination of natural or nonnatural behavior depending on the comparison of the detected real-time data of the user's behavior parameter to the historical data of the user's behavior parameter.

Such non-natural behavior may include extra-physical effort, e.g. pressing the personal care device's working head harder onto the body surface and/or gripping the handle with increased pressure, and/or unergonomic movements or body positions such as holding the wrist at an extreme angle, and/or additional actions or additional movements such as facial grimaces, skin stretching, and/or an extra-mental effort such as extra concentration with longer periods of not closing the eye's lid and/or using the product for longer in general or in specific areas and/or for specific tasks. In addition or in the alternative, such non-natural behavior may include a change in behavior driven by not getting the end result that a user wants such as missed hairs with the user's natural behavior.

In contrast, natural behavior may be identified as any behavior not including the aforementioned non-natural behaviors, and/or a lower effort than non-natural behaviors and/or intuitive behaviors and/or behaviors more enjoyable than non-natural behaviors, e.g. going along with smiling and/or relaxed gripping of the handle. In addition or in the alternative, natural behavior may be behavior without change and/or behavior with changes that are driven by physiology, e.g. when a shaver is guided with lighter pressure over the Adam's apple.

Basically, a plurality of different behavioral parameters may be detected during a treatment session and compared to historical data thereof to reliably determine natural behavior and non-natural behavior. According to an advantageous aspect, such behavioral parameters detected in real-time during a treatment session may include skin contact pressure with which the working head is pressed against a body surface as detected by a skin contact pressure detector, and/or stroke frequency and/or stroke direction and/or stroke length at which the personal care device is guided along a body surface as detected by, e.g., an accelerometer, and/or twisting of the personal care device as detected by, e.g., a gyro meter, and/or hair removal activity.

As determination of natural or non-natural behavior may be a rather complex issue involving a plurality of facets, it may be helpful to detect one or more other behavioral parameters and/or use one or more other behavioral detectors. In particular, non-natural behavior may involve the following aspects and consequently, the following parameters may be detected by the following detectors:
- Using higher or lower pressure (pressing the personal care device harder or lighter against the skin)
   ∘ Pressure, e.g. capacitive or resistive touch sensors
   ∘ Force Sensor which may work 1-, 2-, 3- or multidimensional
   ∘ Hall Sensor
   ∘ Motor current based detection systems, e.g. skin contact force
- Going over a specific body area more often / with many more strokes than in other body areas or than typically done for this area and/or shorter, quicker strokes in a specific facial area
   ∘ Accelerometer
   ∘ Optical systems, e.g. camera
- Rotating the personal care device about its longitudinal axis over a specific body area more often than in other body areas or more often than typically done in this body area
   ∘ Gyroscope
   ∘ Optical systems, e.g. camera
- Unergonomic body positions / movements
   ∘ Motion tracking sensors
   ∘ Accelerometer
   ∘ Optical sensors, e.g. cameras
- Moving the personal care device in circular / curved motions, when the user would rather move the personal care device in straight lines and vica versa and/or doing this only at certain times points / in certain facial areas
   ∘ Motion tracking sensors
   ∘ Accelerometer
   ∘ Gyroscope
- Shaving for longer for the whole shave and/or in certain facial areas
   ∘ Timer
- Differences in shaving behavior between left and right halves of the face
   ∘ Pressure, e.g. capacitive or resistive touch sensors
   ∘ Force Sensor which may work 1-, 2-, 3- or multi-dimensional
   ∘ Hall Sensor
   ∘ Motor current based detection systems, e.g. skin contact force
   ∘ Motion tracking sensors
   ∘ Accelerometer
   ∘ Optical sensors, e.g. cameras
   ∘ Gyroscope
   ∘ Timer
- Higher or lower stroke speed
   ∘ Accelerometer
   ∘ Optical systems, e.g. camera
- Longer or shorter strokes
   ∘ Acceleratometer
   ∘ Optical systems, e.g. camera
- Change in typical stroke pattern (e.g. the order in which different facial areas are shaved)
   ∘ Accelerometer
   ∘ Optical systems, e.g. camera
- Change in angle of working head / handle to face / arm
   ∘ Gyroscope
   ∘ Motion tracking
- Change in grip (e.g. type of grip, where the personal care device is gripped such as moving the hand higher up the handle, force used to grip)
   ∘ Touch Sensor, e.g. capacitive or resistive touch sensors
- Change in contact area between personal care device and body (e.g. contact only with one shaver foil)
   ∘ Hall sensor
- Usage of the second hand (e.g. for skin stretching or trying to get a single missed hair)
   ∘ Motion tracking
   ∘ Optical systems, e.g. camera
- change in the resultant direction that the user is pressing the device against the skin
   ∘ Force Sensor which may work 1-dimensional, 2-dimensional, 3-dimensional or multi-dimensional.

All such real-time data may be compared to historical data of corresponding behavioral parameters, wherein such historical data may come from different sources, e.g. from a storage storing the data of the behavioral parameter as detected by the detector during previous treatment sessions and/or a previous part of a current session, and/or behavioral data detected for the same user when handling other devices, and/or average behavioral parameters from other users for the same type of personal care device and/or other personal care devices, and/or behavioral parameters stored in a database and known to typically indicate non-natural behavior and/or behavioral parameters stored in a database and known to typically indicate natural behavior.

So as to make the identification of non-natural behavior from said comparison of real-time data to historical data easier, the historical data stored in a storage or database may be classified to represent typical natural behavior and/or typical non-natural behavior, wherein such stored historical data may be associated with corresponding classifiers. For example, when the behavior determination algorithm may analyze the real-time data of the behavioral parameter in terms of, e.g., value, changes in the signal, increasing and/or decreasing tendency, maximum and minimum values, amplitude, mean value or signal pattern and/or data pattern such as data values over time, and may compare such real-time data and analysis thereof to stored historical data to identify the closest historical set of data to determine natural or non-natural behavior on the basis of the classifier associated with the closest set of data.

In addition or in the alternative, other comparisons such as deviation of the real-time data from average historical data may be used to identify natural/non-natural behavior.

In addition or in the alternative, the detected behavioral parameter may be analyzed by the behavior determination algorithm to identify a change of behavior with time. For example, users typically alter their behavior over a period of weeks when they start using a new personal care device such as a shaver. In addition or in the alternative, also a change of behavior during a personal care treatment session may be determined.

In an example not according to the claimed invention, the emotional data detected by the at least one emotion sensor may be analyzed in a similar manner. For example, historical data of at least one emotional parameter may be stored and possibly classified as being indicative of natural behavior and/or non-natural behavior so that the behavior determination algorithm may compare the real-time emotion data to such historical emotion data and determine natural or non-natural behavior from the classifier of the closest historical set of data and/or from deviations from stored historic emotion data. Other types of comparisons and/or analyses of the emotion data are possible.

More particularly, the behavior determination algorithm may apply emotional response tracking technologies and/or gesture tracking technologies to the detected emotional parameters. For example, such emotional response tracking and/or gesture tracking may detect when the user is satisfied during a treatment session what may be identified as natural behavior, and/or when the user is not satisfied during the treatment session what may be identified as non-natural behavior. In addition or in the alternative, facial tracking technology such as via cameras may be used to identify people's emotional responses via analysis of facial cues such as mini-changes to the angles of the corners of the mouth and/or corners of the eyes.

Furthermore, there may be at least one detector for detecting and/or measuring physiological and/or biometric parameters for example of a face and/or a neck and/or a hand portion, wherein, e.g., pulse, stress hormone level, blood pressure, sweat levels and/or pheromone levels may be detected and analyzed to determine natural behavior and/or non-natural behavior.

In addition to the aforementioned behavioral parameters and the at least one emotional parameter, the algorithm may further consider environmental or situational or physiological parameters as detected by at least one environmental detector such as air humidity, skin humidity and/or beard length, when determining natural behavior and/or non-natural behavior.

When non-natural behavior is identified, basically different steps may be taken. For example, there may be a step of identifying what the user is trying to achieve with his non-natural behavior. This may include detection and/or analysis of situational data, e.g. physiological conditions such as beard length, climatic conditions such as air humitidy or comparison data of the user's behavioural patterns to a database, e.g. with labelled behavioural patterns that are known by said database.

In addition or in the alternative, feedback may be given to a user upon determination of non-natural behavior. For example, information may be presented to the user which behavioral parameter has been considered to be indicative of non-natural behavior. For example, feedback information may be given that a user applied too much pressure and/or moved the working head along the body with a velocity too high or too low. In addition or in the alternative, information can be presented what would have been the natural behavior.

Such feedback information may be presented in different ways, wherein e.g. optical and/or acoustic signals may be displayed. For example, colored symbols may be indicated, wherein e.g. green light may indicate natural behavior and red light may indicate non-natural behavior such as too much pressure. The feedback may be e.g. provided verbally (e.g. written, spoken) or visually (e.g, lights / LED's that change color, intensity, frequency, etc, e.g. graph on a smart phone display) or acoustically (e.g. buzzer, beep, spoken instructions) or haptically (e.g. handle vibration).

In addition or in the alternative to such feedback, the personal care device may be modified upon determination of non-natural behavior, wherein at least one working parameter of the personal care device and/or the setting thereof may be changed.

The working parameters which may be adjusted by an adjustment mechanism, may comprise different physical settings and/or functions of the device affecting the personal care treatment, such as a mechanical setting or mechanical function of the working head and/or of the working tool and/or of a drive unit or drive train of the device. More particularly, a working parameter changing the way the personal care treatment is applied, can be adjusted. Such mechanical settings or functions may include the moveability of the working head relative to the handle and/or the operation of one or more working tools such as a long-hair cutter and or short hair cutter or groups thereof and the positions thereof relative to other tools, and/or the temperature of a cooling/heating element for cooling/heating the skin, and/or the operation of a lubricant applicator for applying a lubricant to the body portion to be treated.

For example, the personal care device may have a pivotable suspension of its working head to allow for pivoting of the working head relative to the handle about at least one axis, wherein the adjustment mechanism may be configured to adjust the pivoting stiffness of the working head's suspension and/or the resistance and/or unwillingness of the working head against pivoting movements so as to give the personal care device a more aggressive, performance-oriented handling on the one hand and a more comfortable, smoother handling on the other hand, depending on the user's natural or non-natural behavior. More particularly, the adjustment mechanism may vary the torque and/or force necessary to pivot the working head relative to the handle and/or to achieve a certain pivot angle of the working head deviating from a neutral position thereof when non-natural behavior has been determined.

In addition or in the alternative, the adjustment mechanism may be configured to adjust the angular pivoting range of the working head to allow a larger or smaller maximum angular displacement. The personal care device will give a more aggressive, performance-oriented feeling to the user when the maximum available pivoting angle is smaller, whereas a more comfortable, smoother feeling is provided with a larger maximum pivoting angle.

Such adjustment of the pivoting stiffness and/or the angular pivoting range of the working head may be automatically controlled in response to determination of non-natural behavior and/or in response to at least one behavioral parameter selected from the group of parameters comprising skin contact pressure, velocity at which the personal care device is moved along a body portion to be treated, frequency of strokes, angular orientation of the personal care device relative to the gravitational field and position of fingers gripping the handle and position of the working head relative to the body to be treated. As an example when an over-stretched wrist user position is identified together with a shaver orientation that results in the shaver contacting the face in a way that the head is rotated to a maximum angle in one direction, this non-ergonomic behaviour is typically motivated by the need for more control / not wanting the head to swivel away. In this situation, the resistance to the rotation of the head can be significantly increased, so that that higher control is provided without the user needing to stretch their wrist in an uncomfortable way.

In the alternative or in addition, a physiological parameter of the user may be detected by a suitable physiological detector. For example, density and/or length of hairs on a skin portion to be shaved may be detected by a visual or optical sensor such as a camera (which may be provided in the personal care device or external to that, e.g. by a smartphone). Furthermore, skin moisture or skin oiliness may be detected.

In addition to sensor data detected during normal use of the shaver, other pieces of information may be used to determine non-natural or natural behavior. For example, a database of one or more known user adaptions may be used to identify when the particular user is adapting his behavior to the shaver, optionally also including typical adaptions for known physiological and/or climatic conditions, wherein such data base may be based on large-scale consumer research and/or may receive updates during the lifetime of the product. The control unit of the personal care device may compare the individually detected parameters to data from the database to find out if the detected data indicates normal, average behavior and/or normal/average parameters and/or represent an adaptive behavior.

In addition or in the alternative to such reference data from a database or other data / sensed paramters, the determination of natural or non-natural behaviour may further be supported by data collected from the user himself/herself. For example, the device or an external device as e.g. a smart phone or other input device may include input means such as a touchscreen to input a user's preferences.

A display device may include at least one display field which is used for displaying information relative to the determination of natural or non-natural behavior. For example, such display field may be configured to display pictograms such as a cascade or row of display points.

In addition or in the alternative to a display provided on the personal care device itself, a display such as a touch display may be provided on a cleaning and/or loading station configured to receive and/or be connected to the personal care device so as to charge the device's battery and/or clean the device, wherein a fluid may be applied to, e.g., the shaver head to clean the shaver. Such cleaning and/or charging station may include a display device configured to communicate with the personal care device at least when the shaver is docked into the station so as to display and/or input the aforementioned information.

As explained above, basically different types of behavioral parameters and optionally different environmental parameters and optionally different physiological parameters and optionally other parameters may be detected and used in different combinations with each other so as to determine non-natural behavior, wherein also different historical data may be used for such determination. Nevertheless, there are some typical examples of non-natural behavior and corresponding real-time data and historical data indicative of such nonnatural behavior. Such typical examples include the following:
a) Consumer research has shown that men typically start each shave with natural behavior. (Examples parameters measured under "behavior" (pressure, strokes) etc. can be found listed above.) This can be a starting point to be able to identify natural behavior for a particular man, however, it is not possible to simply take the starting behavior over a fixed period of time during this shave of a shave to equal the natural behavior for this man for several reasons. Firstly, this natural behavior phase lasts for different lengths of time for different men. Secondly, for men who shave one facial region after the other, this "initial phase" is shorter for each region and occurs new for each new region.

Thus, further data input is helpful to be able to identify the "initial" periods of each shave that are the natural behavior.

One possible further input is a position identifier e.g. optical system, accelerometers which enables the device to identify where it is on a man's face and thus whether the man shaves one region after the other of his face / neck or whether he goes over his whole face multiple times during the shave. For this purpose, the accelerometer is linked to a microprocessor-based analysis and the accelerometer data can e.g. be used to identify long and short strokes. These long and short strokes can then be linked to certain facial areas (e.g. only short strokes are possible under the nose).

Alternatively or in addition, a sensor that indicates the number of hairs cut may also serve this purpose, as when the shaver is moved to a new facial region, the number of hairs cut per time is suddenly higher and then reduces again as the shaving progresses in this area.

Further, databases based on consumer research can be provided that relate certain parameters (e.g. average level of shave pressure for a man) to the typical percentage of time spent in natural and non-natural behavior. E.g. a man who shaves with particularly high pressure is likely to spend more time in non-natural behavior.

These two further inputs combined with a noticeable change away from the initial measured behavioral values may be used to identify natural behaviors.

b) A man typically changes his shaving behavior over a few weeks when he starts shaving with a new shaver. However, again identification of this change alone is not sufficient to identify natural and non-natural behavior. Typically, one might expect that the behavior during the initial shaves is the natural behavior and the non-natural behavior develops with time as the man alters his behavior to his new shaver. However, it could be that the man had already altered his behavior for his old shaver and continued using this non-natural behavior initially with his new shaver. Over time he then noticed that the non-natural behavior is no longer so necessary with his new shaver and so reverts back to using more natural behavior.

Thus, again at least a second type of input is helpful in order to identify natural and non-natural behaviors.

A database from large scale consumer research with data with parameter values for typical natural and non-natural behaviors may be used. In this way, the behavioral change over the weeks can be compared to this database to identify in which direction the change went.

c) Furthermore, "situational" data can be used to identify what the user is trying to achieve with his non-natural behavior.

When shaving a longer beard e.g. 4 days growth and more, a user will typically adapt his behavior to non-natural behavior to fit the product-physiological (longer beard hairs) situation in that he moves the shaver slower than normal. A typical reason for this is that if the user is not careful, the longer hairs can get caught in the foils and tug, which is painful. This slowing down requires concentration as an extra effort and more time. Automatically raising the trimmers in the shaver head so that the beard hairs now just enter the trimmers and no longer the foils can enable to the user to move the shaver at the normal speed (natural behavior), even with longer beard hairs.

However, as this is a fairly dramatic change to the shaver, it may be advisable to have a second sensor type e.g. optical sensor such as a camera that detects hair length to ensure this is the reason for the change of behavior. Time since last usage is not considered sufficient information as many men use wet razors in addition to electric dry shavers.

d) To identify what the user is trying to achieve with his non-natural behavior a database may be used based on large scale consumer research, optionally with machine learning, that based on multiple sensor inputs shows what the user is typically trying to achieve with certain non-natural behaviors.

E.g. going over a specific facial area many times with higher pressure and shorter strokes (possibly also quicker speed) towards the end of the shave is a typical reaction (non-natural behavior) to missed hairs, although missed hairs can be better shaved with less pressure. The shaver may then adapt itself to reduce the pressure, e.g. via a frame that contacts with the skin and so reduces the pressure on the cutting parts for the same force applied by the user. Alternatively or in addition, feedback may be communicated to the user, either e.g. verbal (e.g:. *when trying to shave single remaining hairs, try using less pressure* (users typically apply more pressure in such situations, which is counterproductive)) or via a signal such as a LED.

Furthermore, it is known from research and consumer tests, that high air humidity leads to sticky skin which means that the frictional forces between skin and shaving foils/trimmers are increased. This leads to a phenomenon called "stick-slip-effect" where the shaver alternately slips easy over the skin or sticks to the skin. This makes shaving more difficult and uncomfortable. Users react in a variety of ways to this, typically they may adapt their behavior to non-natural behavior to the product-environment situation by reducing the shaving pressure they use. As however a general reduction in shaving pressure can have multiple causes, in this situation an additional air humidity sensor could be used in order that the algorithm can identify the appropriate shaver adjustment for this specific situation, such as increasing the stiffness of the shaver neck (spring pre-load) to reduce the uncontrolled swiveling of the head caused by the stick-slip.

e) Moreover, a database of one or ideally more known classical non-natural shaving behaviors may be used to identify when the particular user is adapting his behavior to the shaver, optionally also including typical adaptations for known physiological and/or climatic conditions. The database is based on large scale consumer research. The database may optionally receive updates during the lifetime of the product.

Using a database alone has limitations, as the behavior of each individual user can vary significantly from what is "typical". So, preferably data may also be collected from the user himself and optionally from his environment e.g. via sensor measurement of behavior and optionally additionally sensor measurements of physiological and/or climatic parameters and used to modify the algorithm.

For example, a dry electric shaver cuts the beard hairs best when shaving against the grain. Users typically know this, however, they find it difficult to do so in the neck area and in particular flat lying hairs on the neck and make shaving here even more difficult. In response, when shaving the neck area, a man will typically rotate his shaver around it's longitudinal axis (D) and change his grip such that the shavers front side points away from him. Additionally, the man then rotates the shaver around an axis (H) that is parallel to the swivel axis. However, it is unergonomic and requires extra effort. The reason he intuitively moves the shaver in this way is that for this situation a light swiveling head is counterproductive. By behaving in this way, the use is able to reduce the swivel movement.

Firstly, the shaver recognizes this typically adapting behavior. This can be achieved by multiple different combinations of different sensors such as an accelerometer and a gyroscope. The use of optical sensors, such as cameras, would be an alternative. This may optionally further be supported by the use of physiological and/or climatic data.

Based on usage and optionally physiological and/or climatic data from a high number of users and optionally the use of machine learning, the algorithm knows which typical data from the accelerometer and gyroscope indicate this behavior. Then, when this behavior is identified, a servo-motor increases the preload of a spring that connects the working head and handle to increase the stiffness of the shaver neck and reduce swiveling of the shaver head.

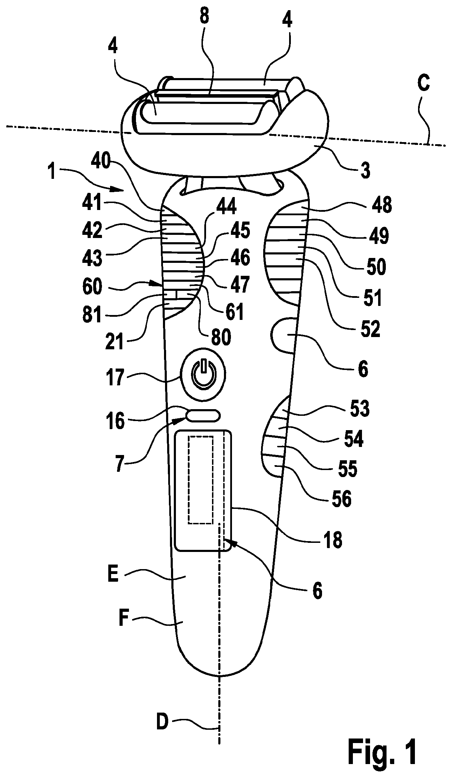

These and other features become more apparent from the example showing in the drawings. As can be seen from Fig. 1, the shaver 1 may have a shaver housing forming a handle 2 for holding the shaver, which handle may have different shapes such as - roughly speaking - a substantially cylindrical shape or box shape or bone shape allowing for economically grabbing the shaver.

On one end of the shaver 1, a shaver head 3 is attached to the handle, wherein the shaver head 3 may be slewably supported about one or more slewing axes.

The shaver head 3 includes at least one cutter unit 4 which may include a cutter element or undercutter reciprocating under a shear-foil. The shaver head 3 may also include a long hair cutter 8 as it is shown by Fig. 1.

So as to drive such cutter unit 4 and the long hair cutter 8, a drive unit 5 may include a motor that can be received within the handle 2 and can be connected to the cutter unit 4 and the long hair cutter 8 by means of a transmitter or drive train extending from the motor to the cutter unit.

As can be seen from Fig. 1, an ON-OFF switch or power switch 17 may be arranged at the handle 2. By means of such power switch 17, the drive unit 5 may be started and switched off again.

As can be seen from Fig. 1, the shaver 1 further includes a display 18 which may be provided on the handle 2, for example on a front side thereof. Such display 18 may be a touch display device allowing individual setting preferences to be input.

As can be seen from Fig. 1, the shaver 1 may include further input elements 7 in terms of, for example, a touch-button 16 which may be positioned in the neighborhood of the power switch 17.

Several working parameters and/or working functions of the shaver 1 can be adjusted by means of an adjustment device 6 which may change mechanical settings and/or operational settings of the shaver such as the pivoting stiffness of the shaver head 3 and the position and/or operation of the long-hair cutter 8. Such adjustment device 6 may include one or more adjustment actuators such as electric motors or electric actors or actors of other types using other forms of energy such as magnetic actors. Such adjustment actuators may be controlled by a control unit 80, wherein such control unit 80 may include an electronic control unit, in particular a micro-controller working on the basis of software stored in a memory.

In addition or in the alternative to controlling such adjustment device 6, the control unit 80 is configured to identify natural and/or non-natural behavior of a user of the shaver 1. More particularly, said control unit 80 may include a behavior determination algorithm 81 which may be implemented, e.g., in terms of a software component executed by a microcontroller of the control unit 80.

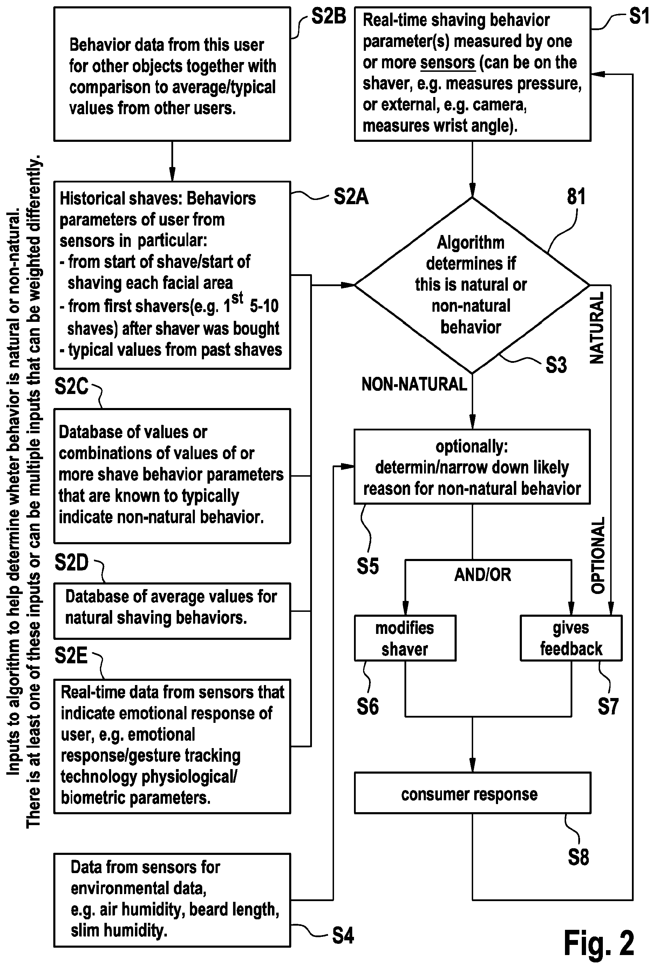

As shown by Fig. 2, said behavior determination algorithm 81 may receive input from and/or may have access to a plurality of sources of information including real-time data detected by one or more detectors and historical data of a plurality of parameters to be compared with the real-time data.

The real-time data may be signals of a plurality of detectors which may detect relevant parameters when handling the personal care device during a current personal care treatment session.

Such detectors may include in particular a force detector 41 for detecting the force with which the working head 3 is pressed onto the body surface 30. Such force detector 41 may include various sensing means such as a sensor measuring diving of the working head 3 towards the handle 2, a sensor measuring bending stresses in the handle or a sensor measuring torque and/or load of a motor driving the working tools which are all representative of contact pressure.

In addition to detection of the aforementioned force, or in the alternative to such force detection, various other behavioral and/or environmental and/or physiological parameters may be detected, wherein the aforementioned behavior determination algorithm may determine non-natural behavior using such real-time data of such parameters.

More particularly, the following detectors may be provided:
- a touch detector 42 for detecting contact of the working head 3 with the body surface 30,
- a velocity and/or acceleration detector 43 for detecting velocity and/or acceleration of the personal care device,
- a rotation detector 44 for detecting rotation and/or orientation of the personal care device in three dimensions,
- a stroke speed and/or stroke length detector 48 for detecting a stroke speed and/or stroke length, wherein such stroke detector 48 may include an accelerometer,
- a stroke density detector 49 for detecting the number of strokes over a predetermined area of the body portion to be treated, wherein such stroke density detector 49 also may include an accelerometer,
- a distance detector 50 for detecting the distance of the shaver 1 and/or the user from a mirror, wherein such distance detector 50 may include a position sensor,
- a detector 51 for detecting pauses in shaving, wherein such detector 51 may include a contact sensor detecting shaver to skin contact or an ON-OFF switch,
- an angle sensor 52 for detecting a change in angle of the shaver head 3 to a user's face and/or a change in angle of the shaver handle 2 to a user's face and/or a change in angle of a shaver handle 2 to a user's hand or arm,
- a grip detector 53 for detecting a change in the type of grip such as moving the fingers higher up the shaver body and/or holding the handle 2 with a thumb on the frontside and the other fingers on the backside etcetera,
- a contact detector 54 for detecting a contact area between the shaver head 3 and the user's face and/or a change in said contact area, for example contact with only one cutter unit 4 and/or both cutter units 4,
- a hair detector 55 for detecting hair density and/or hair length,
- an environmental detector 56 for detecting air humidity and/or air temperature,
- a displacement detector 45 for detecting linear and/or rotatory displacement of the working head 3 relative to the handle 2,
- a cutting activity detector 46 for detecting cutting activity of the personal care device,
- a trimmer position detector 47 for detecting a position of a long hair trimmer
- a skin moisture detector for detecting the user skin's moisture,
- an oiliness detector for detecting the user skin's oiliness.
- a pulse detector for sensing the user's pulse
- a camera detector for sensing the users mimic or gesture.

The shaver 1 further may be provided with a detecting unit for detecting or measuring other parameters relevant to the treatment, wherein such detecting unit may include a voltage and/or current detector for detecting power consumption of the drive unit during shaving and/or a time measurement means for measuring shaving time, for example.

As can be further seen from Fig. 2, in addition to such real-time data coming from block S1, a plurality or just one of historical data may be input into the behavior determination algorithm 81. For example, as indicated by block S2A, historical data as detected by one of the aforementioned detectors during a previous shaving session and/or a previous portion of the current shaving session may be considered by the algorithm 81, wherein such historical data may include data representing behavioral parameters from the start of a shave and/or start of shaving each facial area, and/or data indicative of behavioral parameters from first shaves, e.g. the first ten shaves after the shaver was bought initially used or first time used, and/or typical values from past shaves.

As indicated by block S2B, historical data may include behavioral data from a particular user and/or an average user when handling or using other objects such as door handles, keyboards, showers, shaving cream or other personal care devices such as a toothbrush, wherein such behavioral data may be stored together with a comparison to average typical values from other users to indicate the difference of the behavioral data of a particular user from corresponding data of an average user.

As indicated by block S2C, the historical data also may include values or combination of values of one or more behavioral parameters that are known to typically indicate non-natural behavior, wherein such values and/or combination of values may be stored in an external database, in a cloud or other locations, but also in a storage of the personal care device, wherein such storage may be updated on a regular basis, for example.

As indicated by block S2D, the algorithm 81 also may have access to a database, cloud or storage providing for historical data or values or combination of values of one or more behavioral parameters that are known to typically indicate natural behavior.

Furthermore, as indicated by block S2E, the behavior determination algorithm 81 also may take into account real-time data from sensors or detectors that indicate an emotional response of a user and/or historical data of values or combination of values of emotional parameters that are known to typically indicate non-natural behavior and/or natural behavior.

Furthermore, as indicated by block S4, data from other detectors may be taken into account, e.g. environmental data such as air humidity, skin moisture and/or beard length, wherein such environmental data may be used to optionally determine and/or narrow down likely reasons for non-natural behavior, as indicated by block S5. Such optional determination of a likely reason for non-natural behavior may be part of the behavior determination algorithm 81 and applied/executed upon determination of non-natural behavior, as indicated by the flowchart of Fig. 2.

Upon determination of natural behavior or non-natural behavior, the personal care device may react in different ways. As indicated by Fig. 2, in particular block S6, the aforementioned adjustment mechanism 6 may be activated to modify or adjust a working parameter of the shaver.

In addition or in the alternative, feedback may be given to inform the user his/her behavior was non-natural or natural, as mentioned before.

As indicated by block S8, there may be also a user response. Based on the modification of the shaver and/or the feedback given, the user may or may not change behavior. For example, if the pivoting stiffness was increased, the user may find that he no longer needs to hold his hand/arm in an unergonomic way (as he was doing before in order to prevent the shaver head from swiveling) or if he receives the feedback that he is pressing too hard, then he may press less hard. Alternatively, the user may not change behavior and may continue shaving as before.

As the real-time shaving behavior is detected continuously or repeatedly by the aforementioned plurality of detectors, as indicated by block S1, the change or no change in behavior will be sensed and entered into the behavior determination algorithm 81.

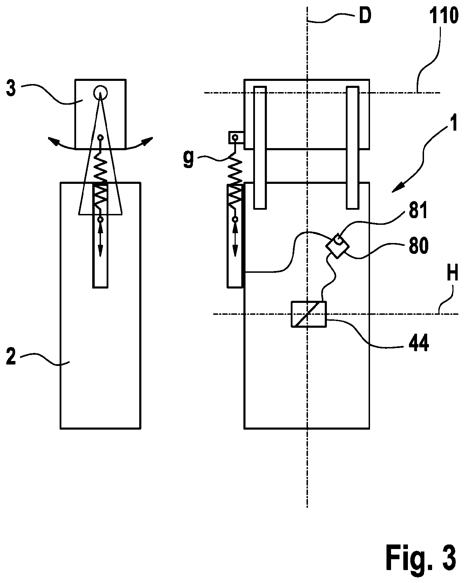

On the basis of the detected real-time parameters and the historical data, the device may determine non-natural behavior in different ways, wherein several further examples comprise the following:
A dry electric shaver cuts the beard hairs best when shaving against the grain. Users typically know this, however they find it difficult to do so in the neck area and in particular flat lying hairs on the neck and make shaving here even more difficult. In response, when shaving the neck area, a user will typically rotate his shaver 1 around it's longitudinal axis (D) and change his grip such that the shavers front side points away from him. Additionally, the user then rotates the shaver around an axis (H) that is parallel to the swivel axis, as shown by Fig. 3. This is done automatically by the user, he typically will not notice that he is doing this. However, it is unergonomic and requires extra effort. The reason he intuitively moves the shaver 1 in this way is that for this situation a light swiveling head i.e. a low pivoting resistance is counterproductive. By behaving in this way, the user is able to reduce the swivel/pivoting movement.

Firstly, the shaver 1 recognizes this typically adapting behavior. This can be achieved by multiple different combinations of different sensors. In this embodiment, the use of an accelerometer and a gyroscope may be advantageous. The use of optical sensors, such as cameras, would be an alternative. This may optionally further be supported by the use of physiological and/or climatic data.

Based on usage and optionally physiological and/or climatic data from a high number of users and optionally the use of machine learning, the algorithm knows which typical data from the accelerometer and gyroscope indicate this behavior. Then, when this behavior is identified, a servo-motor increases the preload of the spring (G) that connects head 3 and handle 2 to increase the stiffness of the shaver neck i.e. pivoting stiffness of the head 3 and reduce the ease of swiveling of the shaver head 3.

More particularly, the shaver head 3 which is movable relative to the shaver handle 2 with at least one degree of freedom e.g. in terms of rotation of shaver head 3 with respect to a rotation axis (herein called swivel axis (C)) that oriented orthogonally to the shaver handle's longitudinal axis (D)), wherein the shaver handle 2 is equipped with an accelerometer sensor (E) and a gyroscope. The accelerometer (E) is set up in a way to determine the spatial orientation and movement of the shaver 1 in relation to the surrounding gravitational field. The gyroscope is set up to determine twisting of the shaver 1 about its longitudinal axis. The relative movement of shaver head 3 to the handle 2 is controlled by an actuator (F), in this case a servomotor, which is set up to adjust the preload of a spring (G) that connects the shaver handle 2 to the shaver head 3. In addition, a camera system may also be included that identifies the location of flat lying hairs.

The extent to which the users rotate the shaver 1 about both axes and the speed at which they do this varies greatly, not only between different users but as well between different shaves or even during a shave. Therefore, an algorithm may be provided within the control unit (80) that controls the preload adjustment of the spring (G) based on continuous monitoring of the accelerometer data, calculating gliding average and gliding spread values on different timescales (= with variable probing times). In this way, the shaver reacts individually to the users shaving behavior to achieve a smother, more effortless shave.

Also findings such as numerical data from consumer research (e.g. pressing the shaver harder on the face than normal for an individual user suggests that he is adapting his behavior) may be taken into account for adjusting the shaver. For example, the shaver 1 may collect shave data from a particular user, so learns what his typical behavior is (e.g each man naturally presses the shaver with his own individual pressure against the skin) and can identify when his behavior varies from this.

The shaver head 3 may be mounted so that it can swivel or tilt relative to the handle 2. A flexible shaving head 3 gives freedom how to hold the device, while enabling good adaptation to different face regions. The shaving head 3 can follow the different contours of checks, neck and jawline. This also ensures that for as much of the time as possible the complete cutting element area is in contact with the skin independent of the angle at which the user holds the shaver (within a certain range). This ensures maximum cutting area contact with the face brings the advantages of better efficiency (a quicker shave) and better skin comfort as the pressing force is spread over a larger area leading to lower pressure on the skin.

However, it has been identified that for certain shave behaviors and/or at certain moments in the shave, a low pivoting stiffness can be disadvantageous. Two examples are listed below:
1. a feeling of a loss of control can arise when a user presses his shaver with particularly high pressure against his face and the head swivels away suddenly;
2. not easy to apply targeted high pressure to a single foil (e.g. some users do this to increase the pressure at the end of the shave for increased closeness). A light swivel typically results in the head rotating so that all cutting elements touch the face.

A typical reaction to these situations is that users will adapt how they hold the shaver 1 in their hand. They change the angle of their hand and the shaver 1 so that the shaver handle 2 lies at an extreme angle such that the head 3 cannot swivel any further. However, this is unergonomic and extra effort.

The current solution typically offered for these issues is a manual lock for the shaving head which can be activated. The consumer can decide between the flexible and the locked settings, however this can be inconvenient, is an extra step (again more effort) and consumers often try other alternatives (e.g. holding the head with their fingers). According to another aspect, there may be automatically adapting the force that resists the swivel movement based on behavioral detection (e.g. detects shaving pressure, detects direction and speed of movements, detects angle of shaver handle, detects which cutting elements have contact to the skin). The algorithm that controls the swivel stiffness may modify itself based on the typical behavior of this particular user that it detects over time.

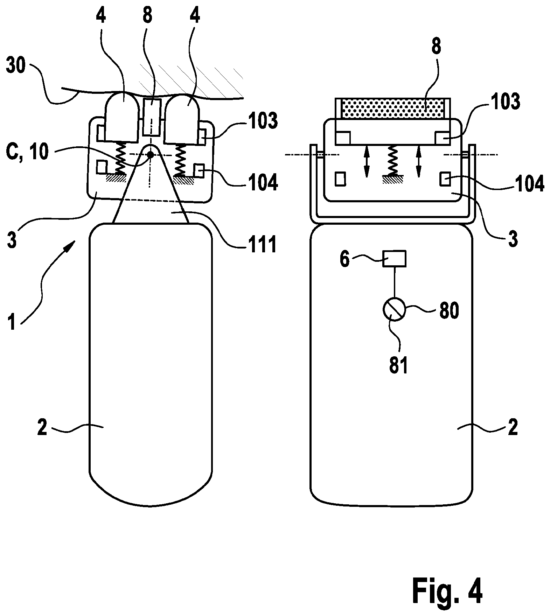

More particularly, the shaver 1 with a swivel head 3 is equipped with pressure sensor 41 and a sensor 43 that detects directions and speed of motion. One or more cutting elements 4 are spring loaded and carry small magnets 103, cf. Fig. 4. The higher the shaving pressure, the more the cutting elements 4 are pressed down. This movement is tracked via hall sensors 104 under each cutting element. The hall sensors are connected to the electronic control unit 80 on the internal PCB of the shaver. Mounted on the PCB may be an accelerometer to detect acceleration of all three axes of the device.

The electronic control unit 80 receives the signals of the hall sensors 104 and the accelerometer . A mathematic function translates the signals into pressure and movement data. E.g. the consumer starts to apply higher shaving pressure than typical the cutting elements 4 are moving deeper into the shaving head 3. Or the movements are faster and shorter. The electronic control unit 80 receives these untypical signals from the hall sensors 104 and the accelerometer and translates it to untypical pressure and movement values. These values are compared with a given matrix of values in real time within the control unit 80 and evaluated to generate the assigned signal for the actuator 113. In this example the spring 112 will be pulled to set a specific stiffness of the swing head 3.

Based on previous usage (e.g. other phases in the same shave and/or previous shaves), the algorithm adjusts the e.g. pressure ranges that are considered to be "low", "medium" or "high. E.g. for a man who typically shaves with a pressure of 1-2 N, the shaver would learn to consider 2N to be a high pressure for this user, whereas for a man who typically shaves with a pressure of 3-5 N, the shaver would learn to consider 2N to be low pressure for this user.

The self-modifying phase of the algorithm starts with the beginning of the first shave: The electronic of the shaver creates medium values. The more shaves are done, the accurate are the stored typical range.

The shaver body may contain a drive motor 5 and a battery 109. The swing head 3 is mounted on an axis 110 which is mounted on a holder 2 of the shaver body. When asymmetric shaving pressure is applied to the shaving system - means more pressure F1 on one of the both foils than F2 on the other - a torque occurs and the shaving head swings around its axis (10) to align on facial contours. The counterforce of the swinging head is minimized to ensure a good adaptation of the shaving system even when low pressure is applied. A pulling spring 112 is mounted between the lower end of the head and the shaver body. The spring sets the force to swing the head. The stronger the spring is set the harder the head can swing. An actuator 113 is attached to the shaver body and holds the end of the spring. It can set the pre-load of the spring 112 by changing the length of the spring. In neutral actuator position the spring has the lowest pre-load and the swing head can swing very easy. At max. actuation the spring is pulled tight and the shaving head needs more shaving pressure to get moved. The consumer feels a more stiff and rigid system. The actuator can set the spring load step-less between min. and max. actuation position.

According to a still further embodiment, the user may be requested to enter data directly e.g. via a smart phone or another device or directly into the shaver in order to provide the algorithm with additional data. This may be a one-time input e.g. after purchase or be requested on a regular basis. This input can then be used to assess, e.g.:
- what is of particular importance to this individual user (e.g. some men focus on closeness, whereas for others the top priority is no redness of skin)
- what problems the user currently has (e.g. missed individual longer hairs)
- details of his physiology that are relevant to shaving, e.g. does he have a particularly dense or sparse beard, does he have sensitive skin, etc
- how he tries to solve his problems
- what sort of climatic conditions might be affecting his shave, e.g. does he typically shave before or after a shower?

Alternatively or in addition, the user may be requested to provide feedback about his shave over time. In this way, the algorithm can assess which of the modifications it made to the shaver were successful and further optimize how it reacts.

The data from multiple users can then optionally be collected and used to further refine the algorithm.

Optionally, feedback and/or instructions may also be given to the user. E.g:. *when trying to shave single remaining hairs, try using less pressure* (users typically apply more pressure in such situations, which is counterproductive)

In another specific example, the algorithm defining the adjustment of the shaver, as described in the previous example, may be a self-modifying classifier (e.g. a neural network). In this case, the outputs of the sensors (e.g. shave pressure, stroke frequency, cutting activity), optionally in combination with further parameters like physiological information from sensors/ data entry (e.g. hair density) and/or climate data from sensors (e.g. air humidity), are linked to the input nodes of one or more shaving behavior classifiers. In the subsequent (hidden) layers of the classifier, the signals are processed and combined by a number of differentiating nodes. Finally, the classifier decides if the current shaving behavior, optionally combined with further parameters named above in this paragraph, requires increasing or decreasing of the shaver head retention spring preload and thus a firmer or less firm feel of the shaving system on the skin.

To initially define the classifier, it is trained using labelled shave behavior data of a large number of test shaves in advance (factory level). The system then is able to adjust itself more detailed to the user by learning his specific user behavior and optionally further parameters (user-at-home level) and his reactions to the adjustments made by the system and/or by updating the classifier with a further trained version from a web-based source (cloud level). For the latter, data of many different users and shaves is collected to enlarge the training dataset. Training in this context means that the links between differentiation nodes are adjusted, weighted or added/deleted systematically and automatically in order to improve the classifier performance.

According to a further aspect, high air humidity leads to sticky skin which means that the frictional forces between skin and shaving foils/trimmers are increased. This leads to a phenomenon called "stick-slip-effect" where the shaver alternately slips easy over the skin or sticks to the skin. This makes shaving more difficult and uncomfortable. Users react in a variety of ways to this, typically they may adapt their behavior to the product-environment situation by reducing the shaving pressure they use. As however a general reduction in shaving pressure can have multiple causes, in this situation an additional air humidity sensor could be used in order that the algorithm can identify the appropriate shaver adjustment for this specific situation, such as increasing the stiffness of the shaver neck (spring pre-load) to reduce the uncontrolled swiveling of the head caused by the stick-slip.

When shaving a longer beard (e.g. 4 days growth and more), a user will typically adapt his behavior to the product-physiological (longer beard hairs) situation in that he moves the shaver slower than normal. A typical reason for this is that if the user is not careful, the longer hairs can get caught in the foils and tug, which is painful. This slowing down requires concentration (extra effort) and more time. Automatically raising the trimmers in the shaver head so that the beard hairs now just enter the trimmers and no longer the foils can enable to the user to move the shaver at the normal speed, even with longer beard hairs. However, as this is a fairly dramatic change to the shaver, it may be advisable to have a second sensor type (e.g. optical sensor such as a camera that detects hair length) to ensure this is the reason for the change of behavior. Time since last usage is not considered sufficient information as many men use wet razors in addition to electric dry shavers.

## Claims

1. Method of operating and/or controlling a personal care device, in particular hair removal device such as an electric shaver, wherein at least one user's behavior parameter is detected by at least one detector (41-56) when handling the personal care device during a personal care treatment session, **characterized by** the steps of
- comparing the real-time data of the detected user's behavior parameter to historical data of at least one behavioral parameter stored in a storage, and
- determination of natural behavior and/or non-natural behavior depending on said comparison of the real-time data and historical data of the behavioral parameter,
wherein, upon detection of non-natural behavior, at least one of the following occurs:
(i) at least one working parameter of the personal care device is modified, and
(ii) feedback information is given to the user in response to non-natural behavior,
and wherein said real-time data used for determination of non-natural behavior include data from a stroke length detector (48) for detecting a stroke length.

2. Method of operating and/or controlling an electric shaver, wherein at least one user's behavior parameter is detected by at least one detector (41-56) when handling the electric shaver during a personal care treatment session, **characterized by** the steps of
- comparing the real-time data of the detected user's behavior parameter to historical data of at least one behavioral parameter stored in a storage, and
- determination of natural behavior and/or non-natural behavior depending on said comparison of the real-time data and historical data of the behavioral parameter,
wherein, upon detection of non-natural behavior, at least one of the following occurs:
(i) at least one working parameter of the electric shaver is modified, and
(ii) feedback information is given to the user in response to non-natural behaviour,
and wherein said real-time data used for determination of non-natural behavior include data from at least one of the following detectors:
- a contact force detector (41) for detecting the force at which the working head (3) is pressed against users' skin,
- a velocity detector (43) for detecting velocity of the electric shaver,
- a rotation detector (44) for detecting rotation and/or orientation of the electric shaver in three dimensions,
- a stroke speed and/or stroke length detector (48) for detecting a stroke speed and/or stroke length,
- an angular orientation detector for detecting an angular orientation of a longitudinal axis of the handle (2) relative to a gravitational field and/or angular rotation of the handle (2),
- a grip detector (53) for detecting a change in the type of grip such of fingers on the handle (2).

3. Method according to any preceding claim, wherein said comparing step includes comparing the real-time data to historical data indicative of at least one behavioral parameter as detected by a detector during a previous personal care treatment session or a previous part of a current treatment session, wherein such historical data include at least one behavioural parameter detected from the start of a personal care treatment and/or the start of a personal care treatment of each facial area, and/or behavioral parameter detected from one or several first personal care treatments after the personal care device or electric shaver was initially used and/or typical values of at least one behavioral parameter from past treatment sessions.

4. Method according to anyone of the preceding claims, wherein said comparing step includes comparing the real-time data to historical data indicative of behavioral data from a particular user as detected during use of another personal care device and/or another object, and including average and/or typical values of corresponding behavioral data from other users.

5. Method according to anyone of the preceding claims, wherein said comparing step includes comparing the real-time data with values or combination of values of one or more behavioral parameters known to typically indicate non-natural behavior and/or known to typically indicate natural behavior.

6. Method according to anyone of the preceding claims, wherein said comparison step includes comparing a mean value and/or an average value and/or a maximum value and/or a minimum value and/or an amplitude and/or a rate of increase and/or a rate of decrease and/or a value pattern of said real-time data of said at least one behavioral parameter to stored historical data representing a mean value and/or an average value and/or a maximum value and/or a minimum value and/or an amplitude and/or a rate of increase and/or a rate of decrease and/or a value pattern of said at least one behavioral parameter.

7. Method according to anyone of the preceding claims, wherein historical data associated with a classifier indicative of non-natural behavior or natural behaviour are compared to the detected real-time data to identify a set of historical data closest to the real-time data, wherein natural or non-natural behavior is determined on the basis of the classifier of the closest set of historical data.

8. Method according to anyone of the preceding claims, wherein signals of a plurality of detectors for detecting a plurality of different behavioral parameters and a plurality of historical data indicative of a plurality of behavioral parameters are input into a behavior de-termination algorithm (81) implemented in a control unit (80) of the personal care device or electric shaver and/or implemented in a control unit of an external device, wherein natural or non-natural behavior is determined by said behavior determination algorithm (81) during a personal care treatment session.

9. Method according to the preceding claim, wherein said different inputs of real-time data and said different inputs of historical data are weighted differently by said behavior determination algorithm (81).

10. Method according to the preceding claim, wherein real-time data and/or historical data indicative of skin contact pressure and/or stroke direction and/or stroke length and/or twisting of the personal care device or electric shaver are weighted higher than real-time data and historical data of other behavioral parameters.

11. Method according to the preceding claim, comprising the further step of:
- upon determination of non-natural behavior, determining what a user is trying to achieve with his/her non-natural behavior.

12. Method according to the preceding claim, wherein environmental data indicative of at least one of the following: air humidity, skin moisture and hair length, as detected during non-natural behavior are analysed to determine what the user was trying to achieve with non-natural behavior.

13. Method according to anyone of the preceding claims, wherein, upon detection of non-natural behavior, at least one working parameter of the personal care device or electric shaver is modified, wherein upon modification of such at least one working parameter, at least one user's behavior parameter characterizing the user's behavior after modification of said working parameter is detected by at least one detector when handling the personal care device or electric shaver after modification of the working parameter, wherein the real-time data of the detected user's behavior parameter after modification of the working parameter is compared to historical data and upon such comparison natural or non-natural behavior is determined.

14. Method according to anyone of the preceding claims, wherein, upon detection of non-natural behavior, feedback information is given to the user in response to non-natural behavior, wherein at least one user's behavior parameter characterizing the user's behaviour after feedback is detected by at least one detector when handling the personal care device or electric shaver after feedback, wherein the real-time data of the detected user's behavior parameter after feedback is compared to historical data and upon such comparison natural or non-natural behavior is determined.

15. Personal care device, in particular hair removal device such as electric shaver, comprising an elongated handle (2) for manually moving the personal care device along a body surface, a working head (3) attached to said handle (2) for effecting a personal care treatment to said body surface, at least one detector (41 to 56) internally in the device provided or external to that for detecting at least one behavioral parameter indicative of a user's behaviour during handling the personal care device, **characterized by** a behavior determination algorithm (81) implemented in a control unit and configured to automatically execute the following:
- comparing the real-time data of the detected user's behavior parameter to historical data of at least one behavioral parameter stored in a storage, and
- determination of natural behavior and/or non-natural behavior depending on said comparison of the real-time data and historical data of the behavioral parameter,
wherein the control unit is configured such that, upon detection of non-natural behavior, at least one of the following occurs:
(i) at least one working parameter of the personal care device is modified, and
(ii) feedback information is given to the user in response to non-natural behavior,
and wherein the natural/non-natural behavior algorithm is configured for determining natural and/or non-natural behavior, in response to a signal of a stroke length detector (48) for detecting a stroke length.

16. Electric shaver, comprising an elongated handle (2) for manually moving the electric shaver along a body surface, a working head (3) attached to said handle (2) for effecting a personal care treatment to said body surface, at least one detector (41 to 56) internally in the electric shaver provided or external to that for detecting at least one behavioral parameter indicative of a user's behaviour during handling the electric shaver, **characterized by** a behavior determination algorithm (81) implemented in a control unit and configured to automatically execute the following:
- comparing the real-time data of the detected user's behavior parameter to historical data of at least one behavioral parameter stored in a storage, and
- determination of natural behavior and/or non-natural behavior depending on said comparison of the real-time data and historical data of the behavioral parameter,
wherein the control unit is configured such that, upon detection of non-natural behavior, at least one of the following occurs:
(i) at least one working parameter of the electric shaver is modified, and
(ii) feedback information is given to the user in response to non-natural behavior,
and wherein the natural/non-natural behavior algorithm is configured for determining natural and/or non-natural behavior, in response to a signal of at least one of the following detectors:
- a contact force detector (41) for detecting the force at which the working head (3) is pressed against users' skin,
- a velocity detector (43) for detecting velocity of the electric shaver,
- a rotation detector (44) for detecting rotation and/or orientation of the electric shaver in three dimensions,
- a stroke speed and/or stroke length detector (48) for detecting a stroke speed and/or stroke length,
- an angular orientation detector for detecting an angular orientation of a longitudinal axis of the handle (2) relative to a gravitational field and/or angular rotation of the handle (2),
- a grip detector (53) for detecting a change in the type of grip such of fingers on the handle (2).

17. Personal care device according to claim 15 or electric shaver according to claim 16, wherein the working head (3) is pivotably supported relative to the handle (2) about at least one pivot axis (110), wherein the adjustment device (6) is configured to adjust a pivoting stiffness of the working head (3) about said at least one pivot axis (110) in response to the at least one detected behavioral parameter and/or determined non-natural behavior.

## Patentansprüche

1. Verfahren zum Betreiben und/oder Steuern einer Körperpflegevorrichtung, insbesondere einer Haarentfernungsvorrichtung, wie eines elektrischen Rasierers, wobei wenigstens ein Verhaltensparameter eines Benutzers durch wenigstens einen Detektor (41-56) erfasst wird, wenn die Körperpflegevorrichtung während einer Körperpflegebehandlungssitzung gehandhabt wird, **gekennzeichnet durch** die Schritte:
- Vergleichen der Echtzeitdaten des erfassten Verhaltensparameters des Benutzers mit historischen Daten wenigstens eines in einem Speicher gespeicherten Verhaltensparameters, und
- Bestimmen von naturgemäßem Verhalten und/oder nicht-naturgemäßem Verhalten in Abhängigkeit von dem Vergleich der Echtzeitdaten und historischen Daten des Verhaltensparameters,
wobei bei Erfassen von nicht-naturgemäßem Verhalten wenigstens eines der Folgenden auftritt:
(i) wenigstens ein Arbeitsparameter der Körperpflegevorrichtung wird modifiziert, und
(ii) Rückmeldungsinformationen werden dem Benutzer als Reaktion auf nicht-naturgemäßes Verhalten gegeben,
und wobei die Echtzeitdaten, die zur Bestimmung von nicht-naturgemäßem Verhalten verwendet werden, Daten von einem Hublängendetektor (48) zur Erfassung einer Hublänge einschließen.

2. Verfahren zum Betreiben und/oder Steuern eines elektrischen Rasierers, wobei wenigstens ein Verhaltensparameter eines Benutzers durch wenigstens einen Detektor (41-56) erfasst wird, wenn der elektrische Rasierer während einer Körperpflegebehandlungssitzung gehandhabt wird, **gekennzeichnet durch** die Schritte:
- Vergleichen der Echtzeitdaten des erfassten Verhaltensparameters des Benutzers mit historischen Daten wenigstens eines in einem Speicher gespeicherten Verhaltensparameters, und
- Bestimmen von naturgemäßem Verhalten und/oder nicht-naturgemäßem Verhalten in Abhängigkeit von dem Vergleich der Echtzeitdaten und historischen Daten des Verhaltensparameters,
wobei bei Erfassen von nicht-naturgemäßem Verhalten wenigstens eines der Folgenden auftritt:
(i) wenigstens ein Arbeitsparameter des elektrischen Rasierers wird modifiziert, und
(ii) Rückmeldungsinformationen werden dem Benutzer als Reaktion auf nicht-naturgemäßes Verhalten gegeben,
und wobei die Echtzeitdaten, die zur Bestimmung des nicht-naturgemäßen Verhaltens verwendet werden, Daten von wenigstens einem der folgenden Detektoren einschließen:
- einem Kontaktkraftdetektor (41) zum Erfassen der Kraft, mit der der Arbeitskopf (3) gegen die Haut des Benutzers gedrückt wird,
- einem Geschwindigkeitsdetektor (43) zum Erfassen der Geschwindigkeit des elektrischen Rasierers,
- einem Rotationsdetektor (44) zum Erfassen von Rotation und/oder Orientierung des elektrischen Rasierers in drei Dimensionen,
- einem Hubgeschwindigkeits- und/oder Hublängendetektor (48) zum Erfassen einer Hubgeschwindigkeit und/oder Hublänge,
- einem Winkelorientierungsdetektor zum Erfassen einer Winkelorientierung einer Längsachse des Griffs (2) relativ zu einem Gravitationsfeld und/oder einer Winkelrotation des Griffs (2),
- einem Greiferdetektor (53) zum Erfassen einer Änderung der Art des Greifens, wie von Fingern an dem Griff (2).

3. Verfahren nach dem vorstehenden Anspruch, wobei der Vergleichsschritt das Vergleichen der Echtzeitdaten mit historischen Daten einschließt, die wenigstens einen Verhaltensparameter angeben, wie er von einem Detektor während einer vorherigen Körperpflegebehandlungssitzung oder eines vorherigen Teils einer aktuellen Behandlungssitzung erfasst wurde, wobei solche historischen Daten wenigstens einen Verhaltensparameter, der seit dem Beginn einer Körperpflegebehandlung und/oder dem Beginn einer Körperpflegebehandlung jedes Gesichtsbereichs erfasst wurde, und/oder Verhaltensparameter, die von einer oder mehreren ersten Körperpflegebehandlungen erfasst wurden, nachdem die Körperpflegevorrichtung oder der elektrische Rasierer erstmals verwendet wurde, und/oder typische Werte wenigstens eines Verhaltensparameters aus vergangenen Behandlungssitzungen einschließen.

4. Verfahren nach einem der vorstehenden Ansprüche, wobei der Vergleichsschritt das Vergleichen der Echtzeitdaten mit historischen Daten einschließt, die Verhaltensdaten von einem bestimmten Benutzer angeben, wie sie während der Verwendung einer anderen Körperpflegevorrichtung und/oder eines anderen Objekts erfasst wurden, und die Durchschnitts- und/oder typische Werte entsprechender Verhaltensdaten von anderen Benutzern einschließen.

5. Verfahren nach einem der vorstehenden Ansprüche, wobei der Vergleichsschritt das Vergleichen der Echtzeitdaten mit Werten oder einer Kombination von Werten eines oder mehrerer Verhaltensparameter einschließt, von denen bekannt ist, dass sie üblicherweise nicht-naturgemäßes Verhalten anzeigen, und/oder von denen bekannt ist, dass sie üblicherweise naturgemäßes Verhalten anzeigen.

6. Verfahren nach einem der vorstehenden Ansprüche, wobei der Vergleichsschritt das Vergleichen eines Mittelwerts und/oder eines Durchschnittswerts und/oder eines Maximalwerts und/oder eines Minimalwerts und/oder einer Amplitude und/oder einer Anstiegsrate und/oder einer Abfallrate und/oder eines Wertemusters der Echtzeitdaten des wenigstens einen Verhaltensparameters mit gespeicherten historischen Daten, die einen Mittelwert und/oder einen Durchschnittswert und/oder einen Maximalwert und/oder einen Minimalwert und/oder eine Amplitude und/oder eine Anstiegsrate und/oder eine Abfallrate und/oder ein Wertemuster des wenigstens einen Verhaltensparameters repräsentieren, einschließt.

7. Verfahren nach einem der vorstehenden Ansprüche, wobei historische Daten, die einem Klassifikator zugeordnet sind, der ein nicht-naturgemäßes Verhalten oder naturgemäßes Verhalten angibt, mit den erfassten Echtzeitdaten verglichen werden, um einen Satz historischer Daten zu identifizieren, die den Echtzeitdaten am nächsten sind, wobei naturgemäßes oder nicht-naturgemäßes Verhalten auf der Basis des Klassifikators des nächsten Satzes historischer Daten bestimmt wird.

8. Verfahren nach einem der vorstehenden Ansprüche, wobei Signale einer Vielzahl von Detektoren zum Erfassen einer Vielzahl von unterschiedlichen Verhaltensparametern und einer Vielzahl von historischen Daten, die eine Vielzahl von Verhaltensparametern angeben, in einen Verhaltensbestimmungsalgorithmus (81) eingegeben werden, der in einer Steuereinheit (80) der Körperpflegevorrichtung oder des elektrischen Rasierers implementiert ist und/oder in einer Steuereinheit einer externen Vorrichtung implementiert ist, wobei während einer Körperpflegebehandlungssitzung durch den Verhaltensbestimmungsalgorithmus (81) naturgemäßes oder nicht-naturgemäßes Verhalten bestimmt wird.

9. Verfahren nach dem vorstehenden Anspruch, wobei die unterschiedlichen Eingaben von Echtzeitdaten und die unterschiedlichen Eingaben von historischen Daten durch den Verhaltensbestimmungsalgorithmus (81) unterschiedlich gewichtet werden.

10. Verfahren nach dem vorstehenden Anspruch, wobei Echtzeitdaten und/oder historische Daten, die den Hautkontaktdruck und/oder die Hubrichtung und/oder die Hublänge und/oder das Verdrehen der Körperpflegevorrichtung oder des elektrischen Rasierers angeben, höher gewichtet werden als Echtzeitdaten und historische Daten anderer Verhaltensparameter.

11. Verfahren nach dem vorstehenden Anspruch, umfassend den weiteren Schritt:
- bei einer Bestimmung von nicht-naturgemäßem Verhalten, Bestimmen, was ein Benutzer versucht, mit seinem nicht-naturgemäßen Verhalten zu erreichen.

12. Verfahren nach dem vorstehenden Anspruch, wobei Umgebungsdaten, die wenigstens eines der Folgenden angeben: Luftfeuchtigkeit, Hautfeuchtigkeit und Haarlänge, wie sie während eines nicht-naturgemäßen Verhaltens erfasst wurden, analysiert werden, um zu bestimmen, was der Benutzer versucht, mit einem nicht-naturgemäßen Verhalten zu erreichen.

13. Verfahren nach einem der vorstehenden Ansprüche, wobei bei einer Erfassung von nicht-naturgemäßem Verhalten wenigstens ein Betriebsparameter der Körperpflegevorrichtung oder des elektrischen Rasierers modifiziert wird, wobei bei Modifikation dieses wenigstens einen Arbeitsparameters, wenigstens ein Verhaltensparameter des Benutzers, der das Verhalten des Benutzers nach Modifikation des Arbeitsparameters **kennzeichnet, durch** wenigstens einen Detektor erfasst wird, wenn die Körperpflegevorrichtung oder der elektrische Rasierer nach Modifikation des Arbeitsparameters gehandhabt wird, wobei die Echtzeitdaten des erfassten Verhaltensparameters des Benutzers nach Modifikation des Arbeitsparameters mit historischen Daten verglichen werden und nach einem solchen Vergleich naturgemäßes oder nicht-naturgemäßes Verhalten bestimmt wird.

14. Verfahren nach einem der vorstehenden Ansprüche, wobei bei einer Erfassung eines nicht-naturgemäßen Verhaltens als Reaktion auf ein nicht-naturgemäßes Verhalten Rückmeldungsinformationen an den Benutzer gegeben werden, wobei wenigstens ein Verhaltensparameter des Benutzers, der das Verhalten des Benutzers nach der Rückmeldung kennzeichnet, von wenigstens einem Detektor erfasst wird, wenn die Körperpflegevorrichtung oder der elektrische Rasierer nach der Rückmeldung gehandhabt wird, wobei die Echtzeitdaten des erfassten Verhaltensparameters des Benutzers nach der Rückmeldung mit historischen Daten verglichen werden und nach einem solchen Vergleich naturgemäßes oder nicht-naturgemäßes Verhalten bestimmt wird.

15. Körperpflegevorrichtung, insbesondere Haarentfernungsvorrichtung, wie elektrischer Rasierer, umfassend einen langgestreckten Griff (2) zum manuellen Bewegen der Körperpflegevorrichtung entlang einer Körperoberfläche, einen an dem Griff (2) angebrachten Arbeitskopf (3) zum Bewirken einer Körperpflegebehandlung der Körperoberfläche, wenigstens einen Detektor (41 bis 56), der intern in der Vorrichtung oder extern bereitgestellt ist, um wenigstens einen Verhaltensparameter zu erfassen, der ein Verhalten eines Benutzers während der Handhabung der Körperpflegevorrichtung angibt,
**gekennzeichnet durch** einen Verhaltensbestimmungsalgorithmus (81), der zum automatischen Ausführen von Folgendem in einer Steuereinheit implementiert und konfiguriert ist:
- Vergleichen der Echtzeitdaten des erfassten Verhaltensparameters des Benutzers mit historischen Daten wenigstens eines in einem Speicher gespeicherten Verhaltensparameters, und
- Bestimmen von naturgemäßem Verhalten und/oder nicht-naturgemäßem Verhalten in Abhängigkeit von dem Vergleich der Echtzeitdaten und historischen Daten des Verhaltensparameters,
wobei die Steuereinheit derart konfiguriert ist, dass bei Erfassung von nicht-naturgemäßem Verhalten mindestens eines der Folgenden auftritt:
(i) wenigstens ein Arbeitsparameter der Körperpflegevorrichtung wird modifiziert, und
(ii) Rückmeldungsinformationen werden dem Benutzer als Reaktion auf nicht-naturgemäßes Verhalten gegeben,
und wobei der Algorithmus für naturgemäßes /nicht-naturgemäßes Verhalten konfiguriert ist, um naturgemäßes und/oder nicht-naturgemäßes Verhalten zu bestimmen, als Reaktion auf ein Signal eines Hublängendetektors (48) zum Erfassen einer Hublänge.

16. Elektrischer Rasierer, umfassend einen langgestreckten Griff (2) zum manuellen Bewegen des elektrischen Rasierers entlang einer Körperoberfläche, einen an dem Griff (2) angebrachten Arbeitskopf (3) zum Bewirken einer Körperpflegebehandlung der Körperoberfläche, wenigstens einen Detektor (41 bis 56), der intern in der Vorrichtung oder extern bereitgestellt ist, um wenigstens einen Verhaltensparameter zu erfassen, der ein Verhalten eines Benutzers während der Handhabung des elektrischen Rasierers angibt,
**gekennzeichnet durch** einen Verhaltensbestimmungsalgorithmus (81), der zum automatischen Ausführen von Folgendem in einer Steuereinheit implementiert und konfiguriert ist:
- Vergleichen der Echtzeitdaten des erfassten Verhaltensparameters des Benutzers mit historischen Daten wenigstens eines in einem Speicher gespeicherten Verhaltensparameters, und
- Bestimmen von naturgemäßem Verhalten und/oder nicht-naturgemäßem Verhalten in Abhängigkeit von dem Vergleich der Echtzeitdaten und historischen Daten des Verhaltensparameters,
wobei die Steuereinheit derart konfiguriert ist, dass bei Erfassung von nicht-naturgemäßem Verhalten mindestens eines der Folgenden auftritt:
(i) wenigstens ein Arbeitsparameter des elektrischen Rasierers wird modifiziert, und
(ii) Rückmeldungsinformationen werden dem Benutzer als Reaktion auf nicht-naturgemäßes Verhalten gegeben,
und wobei der Algorithmus für naturgemäßes/nicht-naturgemäßes Verhalten zum Bestimmen von naturgemäßem und/oder nicht-naturgemäßem Verhalten als Reaktion auf ein Signal von wenigstens einem der folgenden Detektoren konfiguriert ist:
- einem Kontaktkraftdetektor (41) zum Erfassen der Kraft, mit der der Arbeitskopf (3) gegen die Haut des Benutzers gedrückt wird,
- einem Geschwindigkeitsdetektor (43) zum Erfassen der Geschwindigkeit des elektrischen Rasierers,
- einem Rotationsdetektor (44) zum Erfassen von Rotation und/oder Orientierung des elektrischen Rasierers in drei Dimensionen,
- einem Hubgeschwindigkeits- und/oder Hublängendetektor (48) zum Erfassen einer Hubgeschwindigkeit und/oder Hublänge,
- einem Winkelorientierungsdetektor zum Erfassen einer Winkelorientierung einer Längsachse des Griffs (2) relativ zu einem Gravitationsfeld und/oder einer Winkelrotation des Griffs (2),
- einem Greiferdetektor (53) zum Erfassen einer Änderung der Art des Greifens, wie von Fingern an dem Griff (2).

17. Körperpflegevorrichtung nach Anspruch 15 oder elektrischer Rasierer nach Anspruch 16, wobei der Arbeitskopf (3) relativ zum Griff (2) um wenigstens eine Schwenkachse (110) schwenkbar gelagert ist, wobei die Einstellvorrichtung (6) konfiguriert ist, um eine Schwenksteifigkeit des Arbeitskopfs (3) um die wenigstens eine Schwenkachse (110) als Reaktion auf den wenigstens einen erfassten Verhaltensparameter und/oder das bestimmte nicht-naturgemäße Verhalten einzustellen.

## Revendications

1. Procédé d'exploitation et/ou de commande d'un dispositif de soins personnels, en particulier un dispositif d'élimination de poils tel qu'un rasoir électrique, dans lequel au moins un paramètre de comportement de l'utilisateur est détecté par au moins un détecteur (41-56) lors d'une manipulation du dispositif de soins personnels pendant une session de traitement de soins personnels, **caractérisé par** les étapes de
- comparaison des données en temps réel du paramètre de comportement de l'utilisateur détecté à des données historiques d'au moins un paramètre comportemental stocké dans un stockage, et
- détermination d'un comportement naturel et/ou d'un comportement non naturel en fonction de ladite comparaison des données en temps réel et des données historiques du paramètre comportemental,
dans lequel, lors de la détection d'un comportement non naturel, au moins l'un des éléments suivants se produit :
(i) au moins un paramètre de fonctionnement du dispositif de soins personnels est modifié, et
(ii) des informations de retour sont données à l'utilisateur en réponse à un comportement non naturel,
et dans lequel lesdites données en temps réel utilisées pour la détermination d'un comportement non naturel comportent des données provenant d'un détecteur de longueur de course (48) permettant de détecter une longueur de course.

2. Procédé d'exploitation et/ou de commande d'un rasoir électrique, dans lequel au moins un paramètre de comportement de l'utilisateur est détecté par au moins un détecteur (41-56) lors d'une manipulation du rasoir électrique pendant une session de traitement de soins personnels, **caractérisé par** les étapes de
- comparaison des données en temps réel du paramètre de comportement de l'utilisateur détecté à des données historiques d'au moins un paramètre comportemental stocké dans un stockage, et
- détermination d'un comportement naturel et/ou d'un comportement non naturel en fonction de ladite comparaison des données en temps réel et des données historiques du paramètre comportemental,
dans lequel, lors de la détection d'un comportement non naturel, au moins l'un des éléments suivants se produit :
(i) au moins un paramètre de fonctionnement du rasoir électrique est modifié, et
(ii) des informations de retour sont données à l'utilisateur en réponse à un comportement non naturel,
et dans lequel lesdites données en temps réel utilisées pour la détermination d'un comportement non naturel comportent des données provenant d'au moins l'un des détecteurs suivants :
- un détecteur de force de contact (41) permettant de détecter la force à laquelle la tête fonctionnelle (3) est pressée contre la peau des utilisateurs,
- un détecteur de vitesse (43) permettant de détecter la vitesse du rasoir électrique,
- un détecteur de rotation (44) permettant de détecter une rotation et/ou une orientation du rasoir électrique en trois dimensions,
- un détecteur de vitesse de course et/ou de longueur de course (48) permettant de détecter une vitesse de course et/ou une longueur de course,
- un détecteur d'orientation angulaire permettant de détecter une orientation angulaire d'un axe longitudinal du manche (2) par rapport à un champ gravitationnel et/ou une rotation angulaire du manche (2),
- un détecteur de préhension (53) permettant de détecter un changement apporté au type de préhension telle que des doigts sur le manche (2),

3. Procédé selon l'une quelconque des revendications précédentes, dans lequel ladite étape de comparaison comporte la comparaison des données en temps réel à des données historiques indicatives d'au moins un paramètre comportemental telles que détectées par un détecteur pendant une session de traitement de soins personnels précédente ou une partie précédente d'une session de traitement actuelle, dans lequel de telles données historiques comportent au moins un paramètre comportemental détecté à partir du début d'un traitement de soins personnels et/ou du début d'un traitement de soins personnels de chaque zone faciale, et/ou un paramètre comportemental détecté à partir d'un ou plusieurs premiers traitements de soins personnels après que le dispositif de soins personnels ou le rasoir électrique a été initialement utilisé et/ou des valeurs typiques d'au moins un paramètre comportemental provenant de sessions de traitement passées.

4. Procédé selon l'une quelconque des revendications précédentes, dans lequel ladite étape de comparaison comporte la comparaison des données en temps réel à des données historiques indicatives de données comportementales provenant d'un utilisateur particulier telles que détectées pendant l'utilisation d'un autre dispositif de soins personnels et/ou d'un autre objet, et comportant des valeurs moyennes et/ou typiques de données comportementales correspondantes provenant d'autres utilisateurs.

5. Procédé selon l'une quelconque des revendications précédentes, dans lequel ladite étape de comparaison comporte la comparaison des données en temps réel avec des valeurs ou une combinaison de valeurs d'un ou plusieurs paramètres comportementaux connus pour indiquer typiquement un comportement non naturel et/ou connus pour indiquer typiquement un comportement naturel.

6. Procédé selon l'une quelconque des revendications précédentes, dans lequel ladite étape de comparaison comporte la comparaison d'une valeur moyenne et/ou d'une valeur ordinaire et/ou d'une valeur maximale et/ou d'une valeur minimale et/ou d'une amplitude et/ou d'un taux d'augmentation et/ou d'un taux de diminution et/ou d'un motif de valeurs desdites données en temps réel dudit au moins un paramètre comportemental à des données historiques stockées représentant une valeur moyenne et/ou une valeur ordinaire et/ou une valeur maximale et/ou une valeur minimale et/ou une amplitude et/ou un taux d'augmentation et/ou un taux de diminution et/ou un motif de valeurs dudit au moins un paramètre comportemental.

7. Procédé selon l'une quelconque des revendications précédentes, dans lequel des données historiques associées à un classificateur indicatives d'un comportement non naturel ou d'un comportement naturel sont comparées aux données en temps réel détectées pour identifier un ensemble de données historiques les plus proches des données en temps réel, dans lequel un comportement naturel ou non naturel est déterminé sur la base du classificateur de l'ensemble le plus proche de données historiques.

8. Procédé selon l'une quelconque des revendications précédentes, dans lequel des signaux d'une pluralité de détecteurs permettant de détecter une pluralité de paramètres comportementaux différents et une pluralité de données historiques indicatives d'une pluralité de paramètres comportementaux sont entrés dans un algorithme de détermination de comportement (81) implémenté dans une unité de commande (80) du dispositif de soins personnels ou rasoir électrique et/ou implémenté dans une unité de commande d'un dispositif externe, dans lequel un comportement naturel ou non naturel est déterminé par ledit algorithme de détermination de comportement (81) pendant une session de traitement de soins personnels.

9. Procédé selon la revendication précédente, dans lequel lesdites différentes entrées de données en temps réel et lesdites différentes entrées de données historiques sont pondérées différemment par ledit algorithme de détermination de comportement (81).

10. Procédé selon la revendication précédente, dans lequel des données en temps réel et/ou des données historiques indicatives de pression de contact avec la peau et/ou de direction de course et/ou de longueur de course et/ou de torsion du dispositif de soins personnels ou rasoir électrique ont plus de poids que des données en temps réel et des données historiques d'autres paramètres comportementaux.

11. Procédé selon la revendication précédente, comprenant l'étape supplémentaire consistant à :
- lors de la détermination d'un comportement non naturel, déterminer ce qu'un utilisateur essaie d'obtenir avec son comportement non naturel.

12. Procédé selon la revendication précédente, dans lequel les données environnementales indicatives d'au moins l'une des suivantes : humidité de l'air, humidité de peau et longueur de poil, telles que détectées pendant un comportement non naturel sont analysées pour déterminer ce que l'utilisateur essayait d'obtenir avec un comportement non naturel.

13. Procédé selon l'une quelconque des revendications précédentes, dans lequel, lors d'une détection d'un comportement non naturel, au moins un paramètre fonctionnel du dispositif de soins personnels ou rasoir électrique est modifié, dans lequel lors d'une modification d'un tel au moins un paramètre fonctionnel, au moins un paramètre de comportement de l'utilisateur caractérisant le comportement de l'utilisateur après modification dudit paramètre fonctionnel est détecté par au moins un détecteur lors d'une manipulation du dispositif de soins personnels ou rasoir électrique après modification du paramètre fonctionnel, dans lequel les données en temps réel du paramètre de comportement de l'utilisateur détecté après modification du paramètre fonctionnel sont comparées à des données historiques et lors d'une telle comparaison un comportement naturel ou non naturel est déterminé.

14. Procédé selon l'une quelconque des revendications précédentes, dans lequel, lors d'une détection d'un comportement non naturel, des informations de retour sont données à l'utilisateur en réponse au comportement non naturel, dans lequel au moins un paramètre de comportement de l'utilisateur caractérisant le comportement de l'utilisateur après retour est détecté par au moins un détecteur lors d'une manipulation du dispositif de soins personnels ou rasoir électrique après retour, dans lequel les données en temps réel du paramètre de comportement de l'utilisateur détecté après retour sont comparées à des données historiques et lors d'une telle comparaison un comportement naturel ou non naturel est déterminé.

15. Dispositif de soins personnels, en particulier un dispositif d'élimination de poils tel qu'un rasoir électrique, comprenant un manche allongé (2) pour déplacer manuellement le dispositif de soins personnels le long d'une surface de corps, une tête fonctionnelle (3) fixée audit manche (2) pour accomplir un traitement de soins personnels sur ladite surface de corps, au moins un détecteur (41 à 56) de façon interne dans le dispositif fourni ou externe à celui permettant de détecter au moins un paramètre comportemental indicatif d'un comportement de l'utilisateur pendant une manipulation du dispositif de soins personnels, **caractérisé par** un algorithme de détermination de comportement (81) implémenté dans une unité de commande et configuré pour exécuter automatiquement ce qui suit :
- comparaison des données en temps réel du paramètre de comportement de l'utilisateur détecté à des données historiques d'au moins un paramètre comportemental stocké dans un stockage, et
- détermination d'un comportement naturel et/ou d'un comportement non naturel en fonction de ladite comparaison des données en temps réel et des données historiques du paramètre comportemental,
dans lequel l'unité de commande est configurée de telle sorte que, lors de la détection d'un comportement non naturel, au moins l'un des éléments suivants se produit :
(i) au moins un paramètre de fonctionnement du dispositif de soins personnels est modifié, et
(ii) des informations de retour sont données à l'utilisateur en réponse à un comportement non naturel,
et dans lequel l'algorithme de comportement naturel/non naturel est configuré pour déterminer un comportement naturel et/ou non naturel, en réponse à un signal d'un détecteur de longueur de course (48) permettant de détecter une longueur de course.

16. Rasoir électrique, comprenant un manche allongé (2) pour déplacer manuellement le rasoir électrique le long d'une surface de corps, une tête fonctionnelle (3) fixée audit manche (2) pour accomplir un traitement de soins personnels sur ladite surface de corps, au moins un détecteur (41 à 56) de façon interne dans le rasoir électrique fourni ou externe à celui permettant de détecter au moins un paramètre comportemental indicatif d'un comportement de l'utilisateur pendant une manipulation du rasoir électrique, **caractérisé par** un algorithme de détermination de comportement (81) implémenté dans une unité de commande et configuré pour exécuter automatiquement ce qui suit :
- comparaison des données en temps réel du paramètre de comportement de l'utilisateur détecté à des données historiques d'au moins un paramètre comportemental stocké dans un stockage, et
- détermination d'un comportement naturel et/ou d'un comportement non naturel en fonction de ladite comparaison des données en temps réel et des données historiques du paramètre comportemental,
dans lequel l'unité de commande est configurée de telle sorte que, lors de la détection d'un comportement non naturel, au moins l'un des éléments suivants se produit :
(i) au moins un paramètre de fonctionnement du rasoir électrique est modifié, et
(ii) des informations de retour sont données à l'utilisateur en réponse à un comportement non naturel,
et dans lequel l'algorithme de comportement naturel/non naturel est configuré pour déterminer un comportement naturel et/ou non naturel, en réponse à un signal d'au moins l'un des détecteurs suivants :
- un détecteur de force de contact (41) permettant de détecter la force à laquelle la tête fonctionnelle (3) est pressée contre la peau des utilisateurs,
- un détecteur de vitesse (43) permettant de détecter la vitesse du rasoir électrique,
- un détecteur de rotation (44) permettant de détecter une rotation et/ou une orientation du rasoir électrique en trois dimensions,
- un détecteur de vitesse de course et/ou de longueur de course (48) permettant de détecter une vitesse de course et/ou une longueur de course,
- un détecteur d'orientation angulaire permettant de détecter une orientation angulaire d'un axe longitudinal du manche (2) par rapport à un champ gravitationnel et/ou une rotation angulaire du manche (2),
- un détecteur de préhension (53) permettant de détecter un changement apporté au type de préhension telle que des doigts sur le manche (2),

17. Dispositif de soins personnels selon la revendication 15 ou d'un rasoir électrique selon la revendication 16, dans lequel la tête fonctionnelle (3) est supportée de façon pivotante par rapport au manche (2) autour d'au moins un axe de pivotement (110), dans lequel le dispositif d'ajustement (6) est configuré pour ajuster une rigidité de pivotement de la tête fonctionnelle (3) autour dudit au moins un axe de pivotement (110) en réponse à l'au moins un paramètre comportemental détecté et/ou au comportement non naturel déterminé.
